# EUROPÄISCHE PATENTANMELDUNG

(11) **EP 1 775 818 A2**
(43) Veröffentlichungstag der Anmeldung: **18.04.2007**
(21) Anmeldenummer: 06019221.8
(22) Anmeldetag: 14.09.2006
(51) Int. Cl.: H02H 7/09

(54) **Motorschutzschaltung**

(30) Priorität: 07.10.2005 DE 102005048529
(71) Anmelder: Metabowerke GmbH, 72622 Nürtingen (DE)
(72) Erfinder: Niemann, Bernhard, 49740 Haselünne (DE); Siepker, Alois, 49716 Meppen (DE)
(74) Vertreter: Gesthuysen, von Rohr & Eggert

(57) **Zusammenfassung**

Die vorliegende Erfindung betrifft eine Motorschutzschaltung für einen Drehstrommotor (1) mit einem Schaltelement (2) zum Anschluß des Drehstrommotors (1) an eine dreiphasige Versorgungsspannung in Sternschaltung, wobei das Schaltelement (2) versorgungsseitige Schaltanschlüsse (3, 4, 5) und motorseitige Schaltanschlüsse (6, 7, 8) aufweist, wobei die versorgungsseitigen Schaltanschlüsse (3, 4, 5) und die motorseitigen Schaltanschlüsse (6, 7, 8) in einem ersten Schaltzustand des Schaltelements (2) phasenbezogen miteinander verbunden und in einem zweiten Schaltzustand voneinander getrennt sind, wobei das Schaltelement (2) über einen Steuerkreis von dem ersten Schaltzustand in den zweiten Schaltzustand schaltbar ist und wobei das Schaltelement (2) eine Schaltspule (9) mit zwei Schaltanschlüssen (10, 11) aufweist. Es wird vorgeschlagen, daß das Schaltelement (2) über den Steuerkreis auch von dem zweiten Schaltzustand in den ersten Schaltzustand schaltbar ist, daß die Schaltspule (9) als auf die Phasenspannung ausgelegte Niederspannungsspule ausgeführt ist und daß der eine Schaltanschluß (10) der Niederspannungsspule (9) mit dem Stempunkt (12) des Drehstrommotors (1) und der andere Schaltanschluß (11) mit einer Phase der Versorgungsspannung verbunden oder verbindbar ist.

## Beschreibung

Die Erfindung betrifft eine Motorschutzschaltung für einen Drehstrommotor gemäß dem Oberbegriff von Anspruch 1.

Aus dem Stand der Technik ist eine Motorschutzschaltung für einen Drehstrommotor bekannt (DE 201 20 489 U1), bei der ein Schaltelement zum Abschalten des Drehstrommotors bei Überlastung vorgesehen ist. Das Schaltelement weist zum Abschalten, also zum Schalten des Schaltelements von einem ersten Schaltzustand in einen zweiten Schaltzustand, eine Schaltspule auf. Das Einschalten des Drehstrommotors erfolgt durch eine manuelle Betätigung, bei der die drei Phasen der Versorgungsspannung gleichzeitig geschlossen werden. Tatsächlich geschaltet wird jede Phase einzeln, d. h. es werden dreimal je 230 V Phasenspannung geschaltet. Die Schaltspule dieser Motorschutzschaltung überwacht den Phasenversatz zweier Phasen und ist dementsprechend auf deren Differenzspannung von ca. 400 V ausgelegt. Bei Überlastung des Drehstrommotors schaltet die Schaltspule daher eine Spannung von 400 V, sie trennt nämlich eine Phase von einer zweiten Phase. Diese Trennung beendet eine Selbsthalteschaltung, wodurch die weiteren Phasen der Versorgungsspannung getrennt werden.

Soll die bekannte Motorschutzschaltung elektrisch geschaltet werden, so ist dies nicht ohne weiteres möglich. Die elektrischen Schutzvorschriften untersagen nämlich ein direktes elektrisches Schalten einer Spannung von 400 V. Demzufolge liegt der vorliegenden Erfindung die Aufgabe zugrunde, eine Motorschutzschaltung für einen Drehstrommotor anzugeben, bei der das Schaltelement elektrisch schaltbar ist, ohne dabei die Schutzvorschriften zu verletzen.

Das vorliegende Problem wird bei einer Motorschutzschaltung mit den Merkmalen des Oberbegriffs von Anspruch 1 durch die Merkmale des kennzeichnenden Teils von Anspruch 1 gelöst. Vorteilhafte Weiterbildungen sind Gegenstand der Unteransprüche.

Ein grundlegender Aspekt der vorliegenden Erfindung liegt darin, Maßnahmen zu treffen, daß das Schaltelement über den Steuerkreis auch von dem zweiten Schaltzustand in den ersten Schaltzustand schaltbar ist. Aufgrund der elektrischen Schutzvorschriften ist dafür erforderlich, daß die Schaltspule als auf die Phasenspannung ausgelegten Niederspannungsspule ausgeführt ist. Um die realisieren zu können und die Niederspannungsspule dabei nicht durch eine Überlastung zu gefährden, ist vorgesehen, daß ein Schaltanschluß der Niederspannungsspule mit dem Sternpunkt des Drehstrommotors und der andere Schaltanschluß mit einer Phase der Versorgungsspannung verbunden oder verbindbar ist. Dies führt dazu, daß die Niederspannungsspule tatsächlich nur mit der Phasenspannung beaufschlagt wird, nämlich der Spannung zwischen einer Phase und dem Sternpunkt.

Besonders bevorzugt ist eine Ausgestaltung der Motorschutzschaltung, bei der der Steuerkreis einen Ein-Taster zum Schalten des Schaltelements von dem zweiten Schaltzustand in den ersten Schaltzustand aufweist. Der Ein-Taster realisiert dabei einen geschlossenen Stromkreis zwischen zwei Phasen der Versorgungsspannung unter Einschluß der Niederspannungsspule und des Sternpunkts, so daß die Niederspannungsspule in diesem Stromkreis in Reihe mit einer der Wicklungen des Drehstrommotors geschaltet ist. Die Niederspannungsspule wird so ausreichend bestromt, um dann selbsttätig die weiteren Phasen zu schalten.

Ferner bevorzugt ist eine Ausgestaltung, bei der der Steuerkreis, wie an sich bekannt, eine Temperaturüberwachung zur Detektion einer Überlastung aufweist. Bei Auftreten einer Überlastung wird dann das Schaltelement in den zweiten Schaltzustand geschaltet. Der Drehstrommotor wird somit ausreichend geschützt. Besonders vorteilhaft ist dabei eine Ausgestaltung, bei der die Verbindung eines Schaltanschlusses der Niederspannungsspule mit dem Sternpunkt des Drehstrommotors über eine Leitung der Temperaturüberwachung erfolgt. Der Schaltungsaufwand wird so möglichst gering gehalten, da unnötige Leitungen vermieden werden.

Weitere Merkmale, Ziele und Vorteile der vorliegenden Erfindung werden nachfolgend anhand einer Zeichnung zweier Ausführungsbeispiele näher erläutert. In der Zeichnung zeigt
- Fig. 1: in schematischer Darstellung eine erste Ausgestaltung der erfindungsgemäßen Motorschutzschaltung,
- Fig. 2: in schematischer Darstellung eine zweite Ausgestaltung der erfindungsgemäßen Motorschutzschaltung.

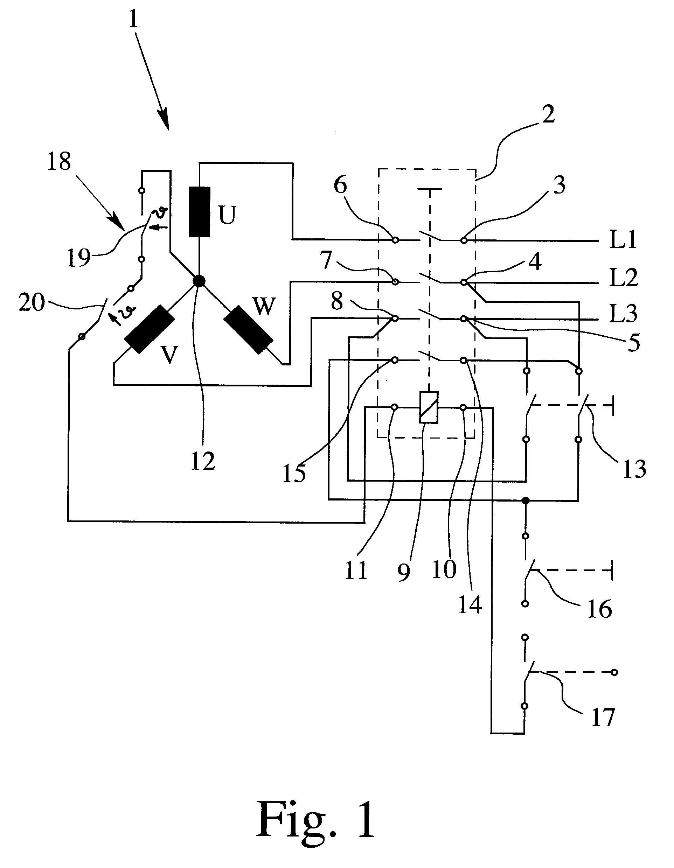

Fig. 1 zeigt einen Drehstrommotor 1 mit den Ständerwicklungen U, V, W, die über ein steuerbares Schaltelement 2 an die drei Phasen der Versorgungsspannung L1, L2, L3 anschließbar sind. Die Ständerwicklungen U, V, W des Drehstrommotors 1 sind in Sternschaltung geschaltet.

Das Schaltelement 2 weist versorgungsseitige Schaltanschlüsse 3, 4, 5 und motorseitige Schaltanschlüsse 6, 7, 8 auf. In einem ersten Schaltzustand des Schaltelements 2 sind die versorgungsseitigen Schaltanschlüsse 3, 4, 5 und die motorseitigen Schaltanschlüsse 6, 7, 8 phasenbezogen miteinander verbunden, so daß der Drehstrommotor 1 an die Versorgungsspannung angeschlossen ist. In einem zweiten Schaltzustand sind die versorgungsseitigen Schaltanschlüsse 3, 4, 5 und die motorseitigen Schaltanschlüsse 6, 7, 8 voneinander getrennt. Das Schaltelement 2 ist über einen Steuerkreis von dem ersten Schaltzustand in den zweiten Schaltzustand schaltbar und erfindungsgemäß ebenfalls von dem zweiten Schaltzustand in den ersten Schaltzustand schaltbar.

Das Schaltelement 2 weist eine Schaltspule 9 mit zwei Schaltanschlüssen 10, 11 auf. Die Schaltspule 9 ist erfindungsgemäß als auf die Phasenspannung ausgelegte Niederspannungsspule ausgeführt. Ein Schaltanschluß 10 der Niederspannungsspule 9 ist mit dem Sternpunkt 12 der Sternschaltung des Drehstrommotors 1 verbunden. Der andere Schaltanschluß 11 ist mit einer Phase der Versorgungsspannung verbunden bzw. über einen Taster verbindbar (siehe unten).

Durch die Verbindung der Niederspannungsspule mit dem Sternpunkt 12 einerseits und mit einer Phase der Versorgungsspannung andererseits ist die maximal an der Niederspannungsspule 9 anliegende Spannung die Spannung der entsprechenden Phase. Dementsprechend führt die Auslegung der Niederspannungsspule 9 auf die Phasenspannung dazu, daß eine Überlastung der Niederspannungsspule 9 nicht stattfindet. Ferner ist es möglich, die Niederspannungsspule 9 unmittelbar zu schalten, ohne gegen Sicherheitsbestimmungen zu verstoßen.

Da die Phasenspannung der einzelnen Phasen üblicherweise 230 V (22U - 240 V) beträgt, ist es vorteilhaft, die Niederspannungsspule auf 230 V auszulegen, wie dies im gezeigten Ausführungsbeispiel der Fall ist.

Zum Schalten des Schaltelements 2 von dem zweiten Schaltzustand in den ersten Schaltzustand weist der Steuerkreis einen Ein-Taster 13 auf. Der Ein-Taster 13 realisiert bei Betätigung einen geschlossenen Stromkreis zwischen zwei Phasen der Versorgungsspannung unter Einschluß der Niederspannungsspule 9 und des Sternpunkts 12. In diesem geschlossenen Stromkreis ist die Niederspannungsspule 9 in Reihe mit einer der Wicklungen U, V, W geschaltet, vorliegend mit der Wicklung V. Hier und vorzugsweise ist also der versorgungsseitige Schaltanschluß 4 der Versorgungsspannung L2 über den Ein-Taster 13 mit dem Schaltanschluß 10 der Niederspannungsspule 9 verbunden. Der Schaltanschluß 11 der Niederspannungsspule 9 ist mit dem Sternpunkt 12 des Drehstrommotors 1 verbunden. Der Sternpunkt 12 wiederum ist über die Wicklung V mit dem motorseitigen Schaltanschluß 6 der Versorgungsspannung L3 verbunden. Dieser ist über den Ein-Taster 13 mit dem versorgungsseitigen Schaltanschluß 3 der Versorgungsspannung L3 verbunden. Insgesamt ergibt sich so der geschlossene Stromkreis zwischen den zwei Phasen L2 und L3. Die Wicklung V gewährleistet dabei, daß als maximale Spannung an der Niederspannungsspule 9 eine Phasenspannung anliegt.

In dem zuvor beschriebenen Schaltkreis ist der Ein-Taster 13 als zweipoliger Ein-Taster ausgeführt. Er schließt nämlich einerseits die Verbindung zwischen dem versorgungsseitigen Schaltanschluß 4 der Versorgungsspannung L2 und dem Schaltanschluß 10 der Niederspannungsspule 9 und andererseits die Verbindung zwischen dem motorseitigen Schaltanschluß 6 und dem versorgungsseitigen Schaltanschluß 3 der Versorgungsspannung L3.

Der hier gezeigte Steuerkreis weist ferner eine Selbsthalteschaltung auf, die das Schaltelement 2 bei Betrieb im ersten Schaltzustand hält. Die Selbsthalteschaltung wird hier realisiert durch zwei weitere Schaltanschlüsse 14, 15, die die Niederspannungsspule 9 in einen geschlossenen Stromkreis zwischen zwei Phasen einbeziehen. Eine solche Selbsthalteschaltung ist grundsätzlich auch aus der DE 201 20 489 U1 bekannt, deren Offenbarungsgehalt hier mit einbezogen wird.

Der Steuerkreis weist ferner einen Aus-Taster 16 auf, durch den das Schaltelement 2 von dem ersten Schaltzustand in den zweiten Schaltzustand schaltbar ist. Der Aus-Taster 16 ist hier und vorzugsweise zwischen dem Ein-Taster 13 und der Schaltspule 9 angeordnet.

Ferner weist der Steuerkreis einen Endschalter 17 auf, durch den das Schaltelement 2 von dem ersten Schaltzustand in den zweiten Schaltzustand schaltbar ist. Der Endschalter 17 ist beispielsweise mit einer zusätzlichen Überwachung des Drehstrommotors 1 und/oder weiterer Umgebungsparameter verbunden und dient insofern der automatischen Abschaltung des Drehstrommotors 1.

Hier und vorzugsweise sind der Aus-Taster 16 und der Endschalter 17 in Reihe geschaltet.

Die Motorschutzschaltung weist hier und vorzugsweise, wie es an sich bekannt ist, eine Temperaturüberwächung 18 auf. Die Temperaturüberwachung 18 ist dabei durch zwei Thermoelemente 19, 20 realisiert, die jeweils einer Wicklung U, V zugeordnet sind. Besonders bevorzugt ist dabei eine Ausgestaltung, bei der die Thermoelemente 19, 20 in oder an der jeweiligen Wicklung U, V angeordnet sind.

Es ist ferner vorgesehen, daß die Verbindung eines Schaltanschlusses 11 der Niederspannungsspule 9 mit dem Sternpunkt 13 des Drehstrommotors 1 über eine Leitung der Temperaturüberwachung 18 erfolgt. Die Schaltung kann dadurch mit möglichst wenig einzelnen Leitungen und Kontakten realisiert werden. In der in Fig. 1 gezeigten Ausgestaltung sind die beiden Thermoelemente 19, 20 miteinander in Reihe geschaltet. Diese Reihenschaltung ist einerseits mit dem Sternpunkt 12 und andererseits mit dem Schaltanschluß 11 der Niederspannungsspule 9 verbunden.

Die zuvor beschriebene Motorschutzschaltung zeichnet sich ferner dadurch aus, daß ein N-Leiter-Anschluß nicht vorhanden oder belegt ist. Die Motorschutzschaltung eignet sich daher insbesondere auch zur Verwendung in Stromnetzen, die keinen N-Leiter vorsehen.

Für das Schalten des Schaltelements 2 von dem zweiten Schaltzustand in den ersten Schaltzustand ergibt sich nun folgende Funktionsweise:

Der Ein-Taster 13 wird betätigt und verbindet so den versorgungsseitigen Schaltanschluß 4 der Versorgungsspannung L2 mit dem Schaltanschluß 10 der Niederspannungsspule 9. Ferner verbindet der Ein-Taster 13 durch seine zweipolige Ausgestaltung den versorgungsseitigen Schaltanschluß 5 mit dem motorseitigen Schaltanschluß 6, so daß insgesamt ein Strom fließen kann von dem versorgungsseitigen Schaltanschluß 3 über den Ein-Taster 13, durch die Thermoelemente 19, 20 zu dem Sternpunkt 12. Von dort fließt der Strom durch die Wicklung V zu dem motorseitigen Schaltanschluß 6 und über den Ein-Taster 13 zu dem versorgungsseitigen Schaltanschluß 5. Dieser Stromfluß durch die Niederspannungsspule 9 verursacht ein selbsttätiges Schalten des Schaltelements 2, nämlich ein Schließen der Kontakte zwischen dem versorgungsseitigen Schaltanschluß 3 und dem motorseitigen Schaltanschluß 6, dem versorgungsseitigen Schaltanschluß 4 und dem motorseitigen Schaltanschluß 7, dem versorgungsseitigen Schaltanschluß 5 und dem motorseitigen Schaltanschluß 8 und den Schaltanschlüssen 14, 15 der Selbsthalteschaltung. Der Drehstrommotor 1 ist somit an die dreiphasige Versorgungsspannung angeschlossen. Die Selbsthalteschaltung hält dabei das Schaltelement 2 in dem ersten Schaltzustand. Dies wird durch den zuvor beschriebenen Stromkreis zwischen zwei Phasen über die Schaltanschlüsse 14, 15 realisiert.

Das Schalten des Schaltelements 2 von dem ersten Schaltzustand in den zweiten Schaltzustand ist auf verschiedene Art und Weise möglich. Bei einer erhöhten Temperatur in einem der Thermoelemente 19, 20 öffnet das entsprechende Thermoelement 19, 20 und unterbricht so die Selbsthalteschaltung, so daß daraufhin das Schaltelement 2 von dem ersten Schaltzustand in den zweiten Schaltzustand schaltet.

Weitere Möglichkeiten zur Unterbrechung der Selbsthalteschaltung bieten der Aus-Taster 16 sowie der Endschalter 17.

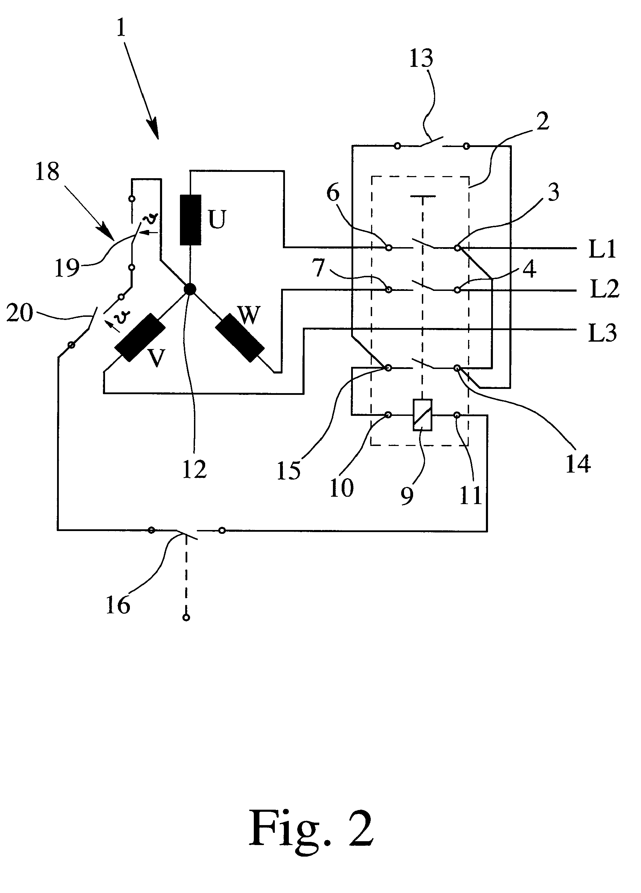

Fig. 2 zeigt eine weitere Ausgestaltung der vorliegenden Erfindung. Diese unterscheidet sich von der zuvor beschriebenen Ausgestaltung dadurch, daß eine Phase der Versorgungsspannung, hier die Phase L3, schaltanschlußfrei mit dem Drehstrommotor 1 verbunden ist. Dadurch werden zwei Schaltanschlüsse, nämlich der versorgungsseitige Schaltanschluß 5 sowie der motorseitige Schaltanschluß 8 eingespart.

Ferner ermöglicht die schaltanschlußfreie Phase L3 der Versorgungsspannung eine Ausgestaltung, bei der der Ein-Taster 13 einpolig ausgeführt ist. Hierzu wird durch den Ein-Taster 13 ein geschlossener Stromkreis zwischen der schaltanschlußfreien Phase L3 und einer weiteren Phase der Versorgungsspannung, hier der Phase L1, unter Einschluß der Niederspannungsspule 9 und des Stempunkts 12 realisiert. Der Aufbau und die Funktionsweise dieser Motorschutzschaltung sind im übrigen analog zu der zuvor beschriebenen Motorschutzschaltung.

## Patentansprüche

1. Motorschutzschaltung für einen Drehstrommotor (1)
mit einem Schaltelement (2) zum Anschluß des Drehstrommotors (1) an eine dreiphasige Versorgungsspannung in Sternschaltung,
wobei das Schaltelement (2) versorgungsseitige Schaltanschlüsse (3, 4, 5) und motorseitige Schaltanschlüsse (6, 7, 8) aufweist,
wobei die versorgungsseitigen Schaltanschlüsse (3, 4, 5) und die motorseitigen Schaltanschlüsse (6, 7, 8) in einem ersten Schaltzustand des Schaltelements (2) phasenbezogen miteinander verbunden und in einem zweiten Schaltzustand voneinander getrennt sind,
wobei das Schaltelement (2) über einen Steuerkreis von dem ersten Schaltzustand in den zweiten Schaltzustand schaltbar ist und
wobei das Schaltelement (2) eine Schaltspule (9) mit zwei Schaltanschlüssen (10, 11) aufweist,
**dadurch gekennzeichnet,**
**daß** das Schaltelement (2) über den Steuerkreis auch von dem zweiten Schaltzustand in den ersten Schaltzustand schaltbar ist,
**daß** die Schaltspule (9) als auf die Phasenspannung ausgelegte Niederspannungsspule ausgeführt ist und
**daß** der eine Schaltanschluß (10) der Niederspannungsspule (9) mit dem Sternpunkt (12) des Drehstrommotors (1) und der andere Schaltanschluß (11) mit einer Phase der Versorgungsspannung verbunden oder verbindbar ist.

2. Motorschutzschaltung nach Anspruch 1, **dadurch gekennzeichnet,**
**daß** die Niederspannungsspule (9) für ca. 220 - 230 V Phasenspannung ausgelegt ist.

3. Motorschutzschaltung nach Anspruch 1 oder 2, **dadurch gekennzeichnet,**
**daß** der Steuerkreis einen Ein-Taster (13) zum Schalten des Schaltelements (2) von dem zweiten Schaltzustand in den ersten Schaltzustand aufweist, der einen geschlossenen Stromkreis zwischen zwei Phasen der Versorgungsspannung unter Einschluß der Niederspannungsspule (9) und des Sternpunktes (12) realisiert, so daß die Niederspannungsspule (9) in diesem Stromkreis in Reihe mit einer der Wicklungen des Drehstrommotors (1) geschaltet ist,
wobei, vorzugsweise, der Ein-Taster (13) als zweipoliger Ein-Taster ausgeführt ist.

4. Motorschutzschaltung nach einem der Ansprüche 1 bis 3, **dadurch gekennzeichnet,**
**daß** der Steuerkreis, wie an sich bekannt, eine Selbsthalteschaltung aufweist, die das Schaltelement (2) im ersten Schaltzustand hält.

5. Motorschutzschaltung nach einem der Ansprüche 1 bis 4, **dadurch gekennzeichnet,**
**daß** der Steuerkreis einen Aus-Taster (16) aufweist, durch den das Schaltelement (2) von dem ersten Schaltzustand in den zweiten Schaltzustand schaltbar ist, und/oder daß der Steuerkreis einen Endschalter (17) aufweist, durch den das Schaltelement (2) von dem ersten Schaltzustand in den zweiten Schaltzustand schaltbar ist,
wobei, vorzugsweise, der Aus-Taster (16) und der Endschalter (17) in Reihe geschaltet sind.

6. Motorschutzschaltung nach einem der Ansprüche 1 bis 5, **dadurch gekennzeichnet,**
**daß** der Steuerkreis, wie an sich bekannt, eine Temperaturüberwachung (18) zur Detektion einer Überlastung aufweist und daß das Schaltelement (2) bei Detektion einer Überlastung in den zweiten Schaltzustand geschaltet wird,
wobei, vorzugsweise, die Temperaturüberwachung (18), wie an sich bekannt, durch mindestens ein Thermoelement (19, 20) realisiert ist, das vorzugsweise in oder an einer Wicklung angeordnet ist.

7. Motorschutzschaltung nach Anspruch 6, **dadurch gekennzeichnet,**
**daß** die Verbindung eines Schaltanschlusses (10, 11) der Niederspannungsspule (9) mit dem Sternpunkt (12) des Drehstrommotors (1) über eine Leitung der Temperaturüberwachung (18) erfolgt.

8. Motorschutzschaltung nach einem der Ansprüche 1 bis 7, **dadurch gekennzeichnet,**
**daß** ein N-Leiter-Anschluß nicht vorhanden oder zwar vorhanden, aber nicht belegt ist.

9. Motorschutzschaltung nach einem der Ansprüche 1 bis 8, **dadurch gekennzeichnet,**
**daß** eine Phase der Versorgungsspannung schaltanschlußfrei mit dem Drehstrommotor (1) verbunden ist.

10. Motorschutzschaltung nach den Ansprüchen 3 und 9, **dadurch gekennzeichnet,**
**daß** der Ein-Taster (13) einen geschlossenen Stromkreis zwischen der schaltanschlußfreien Phase und einer weiteren Phase der Versorgungsspannung unter Einschluß der Niederspannungsspule (9) und des Sternpunktes (12) realisiert.
